# EUROPÄISCHE PATENTSCHRIFT

(11) **EP 3 189 317 B1**
(45) Veröffentlichungstag und Bekanntmachung des Hinweises auf die Patenterteilung: **17.04.2019**
(21) Anmeldenummer: 15784558.7
(22) Anmeldetag: 03.09.2015
(51) Int. Cl.: G01K 1/14

(54) **MESSGERÄT ZUM AUFSETZEN AUF UNTERSTÜTZENDE OBERFLÄCHEN VON MESSOBJEKTEN**
MEASURING DEVICE TO BE PLACED ON SUPPORTING SURFACES OF OBJECTS BEING MEASURED
APPAREIL DE MESURE DESTINÉ À ÊTRE POSÉ SUR DES SURFACES DE SOUTIEN D'OBJETS À MESURER

(30) Priorität: 04.09.2014 DE 102014217706
(43) Veröffentlichungstag der Anmeldung: 12.07.2017
(73) Patentinhaber: PRÜFTECHNIK Dieter Busch AG, 85737 Ismaning (DE)
(72) Erfinder: LYSEN, Heinrich, 85748 Garching (DE); LÖSL, Johann, 84172 Busch am Erlbach (DE)
(86) Internationale Anmeldenummer: PCT/DE2015/200448
(87) Internationale Veröffentlichungsnummer: WO 2016/034177

(56) Entgegenhaltungen:
- DE-C1- 4 322 825
- JP-A- H07 139 994
- JP-A- H08 136 407

## Beschreibung

Die vorliegende Erfindung betrifft ein Messgerät, das zum Messen von Messgrößen eines Messobjektes auf einer das Messgerät unterstützenden Oberfläche des Messobjektes aufsetzbar ist.

Messgeräte, die zum Messen bestimmter Messgrößen von Messobjekten auf der Oberfläche der Messobjekte aufgesetzt werden, sind grundsätzlich bekannt. So ist beispielsweise in der DE 43 22 825 C1 eine Haltevorrichtung für einen Messgrößen aufnehmenden Gegenstand offenbart, die an einer magnetisierbaren Fläche eines flachen oder gekrümmten Körpers magnetisch aufgespannt werden kann. Hierzu ist ein stempelförmiger Polschuh verschieblich ausgeführt, so dass er beim Anlegen der Haltevorrichtung von der Magnetkraft an die Anlagefläche hin verschoben wird. Der Polschuh kann für die Aufnahme von Schwingungs- und/oder Beschleunigungsgrößen ausgelegt sein, aber auch zur Aufnahme anderer Messgrößen wie der Temperatur.

Ferner ist aus der JP 07139994 A ein Schwingungsmessgerät bekannt, das mit drei Auflageflächen an der Oberfläche eines Messobjektes aufsetzbar ist und zeitweilig am Messobjekt gehaltert werden kann. Im Inneren des Schwingungsmessgerätes sind drei Schwingungssensoren angeordnet, die jeweilige Schwingungen in jeweiligen zueinander orthogonalen Richtungen erfassen können. Ein anderes Schwingungsmessgerät mit einer Magnethalterung ist in der JP 02008715 A offenbart. Hingegen zeigt die JP H08 136407A eine Vorrichtung mit einem Arbeitstisch und drei Klammerelementen, von denen eines mit einem Schwingungssensor ausgestattet ist.

Darüber hinaus zeigt die DE 10 2010 056 466 A1 ein Schwingungsmessgerät, das zwar zwei Schwingungssensoren und einen Temperatursensor umfasst, das jedoch zum Ankoppeln an eine dazu eingerichtete Messstelle des Messobjektes unter Verwendung eines Messbolzens vorgesehen ist, jedoch nicht zum Aufsetzen auf unterstützende Oberflächen von Messobjekten.

Angesichts des genannten Standes der Technik ist es die Aufgabe der vorliegenden Erfindung, ein Messgerät zu schaffen, das sich einerseits durch eine kompakte Bauweise und andererseits durch eine möglichst hohe Standsicherheit auszeichnet, wenn das Messgerät zum Messen von Messgrößen eines Messobjektes auf einer Oberfläche des Messobjektes aufgesetzt wird.

Diese Aufgabe wird durch das Messgerät mit den Merkmalen des Anspruchs 1 gelöst. Bevorzugte Ausführungsformen sind Gegenstand der abhängigen Ansprüche.

Gemäß der vorliegenden Erfindung umfasst das Messgerät wenigstens drei vorspringende Kontaktflächen, deren Mittelpunkte gleichmäßig entlang eines gedachten oder imaginären Kreises verteilt sind und die bei Aufsetzen des Messgerätes auf der Oberfläche eines Messobjektes an dieser Oberfläche anliegen und von ihr unterstützt werden. Mit anderen Worten weisen die Mittelpunkte jeweils zweier benachbarter Kontaktflächen einen Winkelabstand von im Wesentlichen 120° auf. Hierdurch wird dem Messgerät eine hohe Standsicherheit verliehen, da die drei Kontaktflächen wie ein das Messgerät tragendes oder unterstützendes Dreibein wirken, welches prinzipiell einen besonders stabilen Stand gewährleistet. Weil die Standsicherheit eines Dreibeines was die Ebenheit und Formgebung des Untergrundes angeht vergleichsweise anspruchslos ist, wirkt sich die Ausführung der Kontaktflächen in der Art eines Dreibeines insbesondere bei Aufsetzen des Messgerätes auf unebenen Oberflächen vorteilhaft auf die Standsicherheit des Messgerätes aus. Vorteilhafterweise sind die Kontaktflächen zudem zueinander äquidistant, d.h. deren Abstände entlang gerader Linien sind im Wesentlichen jeweils gleich. Dies kann zum Beispiel auf einfache Weise realisiert werden, indem alle Kontaktflächen dieselbe Form und Größe aufweisen, und insbesondere dann, wenn alle Kontaktflächen kreisförmig und mit demselben Durchmesser ausgebildet sind.

Ferner umfasst erfindungsgemäß eine erste der Kontaktflächen einen Temperaturfühler zum Messen der Oberflächentemperatur des Messobjektes, während eine zweite und dritte der Kontaktflächen zum Messen jeweiliger anderer Messgrößen vorgesehen sind, wodurch das erfindungsgemäße Messgerät überaus platzsparend ausgeführt ist. Insbesondere die Integration des Temperaturfühlers in eine der Kontaktflächen des Messgerätes führt zu einer beträchtlichen Raumersparnis, da Temperaturfühlern von Temperaturmessgeräten zum Erfassen der Temperatur des Messobjektes normalerweise ein gewisser Raum auf der Oberfläche des Messobjektes bereitgestellt werden muss, an dem die Temperaturfühler mit der Oberfläche in Kontakt kommen können. So ist es beispielsweise nicht mehr nötig, den Temperaturfühler aus einem Gehäuse des Messgerätes hervorragen zu lassen. Bei dem Messgerät der vorliegenden Erfindung wird die Raumersparnis durch das Vorsehen der beiden anderen Kontaktflächen zum Messen jeweiliger anderer Messgrößen vorteilhaft noch weiter erhöht. In Verbindung mit der dreibeinigen Ausführung der Kontaktflächen wird darüber hinaus dank der hohen Standfestigkeit von Dreibeinen eine gute Kontaktierung der Kontaktflächen bzw. des Temperaturfühlers mit der Oberfläche des Messobjektes und damit eine verlässliche Messung der zu messenden Messgrößen gewährleistet. Hierbei kann das Messgerät mittels einer Magnethalterung am Messobjekt gehalten sein bzw. es kann wenigstens einen Magneten aufweisen, so dass es mittels vom Magneten ausgeübten magnetischen Kräften an der Oberfläche des Messobjektes fixierbar ist.

Bei einer bevorzugten Ausführungsform des erfindungsgemäßen Messgerätes ist die zweite Kontaktfläche Teil eines ersten Vibrationsmessers zum Messen von Schwingungen des Messobjektes. Zu diesem Zweck kann das Messgerät wenigstens einen Schwingungssensor oder Beschleunigungssensor aufweisen. Bei diesem kann es sich um einen einaxialen Schwingungssensor, der Schwingungen oder Vibrationen in einer Richtung, üblicherweise in einer Normalenrichtung zur Oberfläche des Messobjektes, misst, oder einen dreiaxialen Schwingungssensor handeln, der Schwingungen oder Vibrationen in drei senkrecht aufeinander stehenden Richtungen misst, wobei üblicherweise eine dieser Richtungen eine Normalenrichtung zur Oberfläche des Messobjektes ist.

Bei den Beschleunigungssensoren kann es sich um beliebige Beschleunigungssensoren handeln, wie zum Beispiel um bekannte mikromechanische (MEMS) oder piezoelektrische Beschleunigungssensoren.

Da in Maschinenanlagen auftretende Frequenzen zumeist im Bereich von 0 Hz bis 40 kHz liegen, handelt es sich beim ersten Vibrationsmesser besonders bevorzugt um einen Beschleunigungssensor zur Erfassung von Schwingungen im Bereich von 0 Hz bis 1 kHz. Beispielsweise kann der erste Vibrationsmesser bzw. der Beschleunigungssensor einen dreiaxialen Schwingungssensor aufweisen, der in der Lage ist, lineare Schwingungen in drei Raumrichtungen zu messen und für Beschleunigungsmessungen im Bereich von 0 Hz bis 1 kHz besonders gut geeignet ist, so dass auch Winkel zum Lot, d.h. dem Lot zum Erdmittelpunkt, damit bestimmt werden können. Dies kann beispielsweise zur Ermittlung oder Verifikation einer Messposition am Messobjekt oder für eine Koordinatentransformation der Messwerte aus der Messrichtung in eine Maschinenrichtung vorteilhaft sein.

Besonders bevorzugt ist die dritte Kontaktfläche Teil eines zweiten Vibrationsmessers zum Messen von Schwingungen des Messobjektes, die hochfrequenter sind als die vom ersten Vibrationsmesser gemessenen Schwingungen des Messobjektes. Bei diesem hochfrequenten Beschleunigungssensor kann es sich um einen MEMS-Baustein oder einen piezoelektrischen Beschleunigungssensor handeln bzw. er kann einen MEMS-Baustein oder einen piezoelektrischen Beschleunigungssensor aufweisen, der nur in eine Raumrichtung messen und mit einer Resonanzfrequenz von 22 kHz oder darüber als Aufnehmer für Schockwellen geeignet sein kann. Solche Schockwellen entstehen durch die Bewegung mechanisch beschädigter Bereiche, z.B. von Wälzkörpern beim Aufprall auf den Innen- oder Außenring eines Lagers. In einer weiteren bevorzugten Ausführungsform weisen der erste Vibrationsmesser und/oder der zweite Vibrationsmesser einen MEMS-Baustein auf, der zur Bestimmung einer Richtung zum Lot zum Erdmittelpunkt vorgesehen oder eingerichtet ist.

Vorteilhafterweise kann jeder der Kontaktflächen wenigstens ein Magnet zugeordnet sein, wobei das Messgerät mittels von den Magneten ausgeübten magnetischen Kräften an der Oberfläche des Messobjektes fixierbar ist. Hierdurch ist ein einfach und preisgünstig herzustellender Haltemechanismus realisiert, der zudem ein schnelles und bequemes An- und Entkoppeln des Messgerätes an das Messobjekt erlaubt. Zudem ist infolge der Anordnung der Magnete, die vorzugsweise alle gleichartig sind bzw. gleich starke Magnetkräfte ausüben, und deren hierdurch erzielten gleichmäßigen magnetischen Anziehungskräften ein mechanisch stabiles Anliegen jeder einzelnen der drei Kontaktflächen an dem Messobjekt gewährleistet. Bei diesen Magneten handelt es sich vorzugsweise um Permanentmagnete, gleichwohl können aber auch Elektromagnete vorgesehen sein.

Besonders bevorzugt ist wenigstens einer der Magnete beweglich ausgeführt. Ein derartiger Magnet kann sich auch an stark uneben oder ungleichförmig ausgebildeten Oberflächen des Messobjektes anpassen, wodurch eine größtmögliche Anpresskraft des Messgerätes an das Messobjekt und dadurch ein bestmöglicher Kontakt der Kontaktflächen an der Oberfläche des Messobjektes erzielt werden. Ein guter Kontakt der Kontaktflächen an der Oberfläche des Messobjektes wirkt sich wiederum günstig auf den Betrieb des Messgerätes aus, da vom Messgerät ausgeführte Messungen weniger fehlerbehaftet und allgemein verlässlicher sind.

Das erfindungsgemäße Messgerät kann wenigstens einen Prozessor und/oder wenigstens einen Datenspeicher und/oder wenigstens eine Schnittstelle zur Datenübertragung und/der wenigstens eine Energiequelle und/oder wenigstens einen Anschluss für eine Energiequelle aufweisen. Sofern das Messgerät einen Prozessor aufweist, kann es Messdaten der gemessenen Messgrößen selber weiterverarbeiten oder auswerten. Weist das Messgerät hingegen einen Datenspeicher anstelle des Prozessors auf, so können gemessene Messdaten in diesem Datenspeicher gespeichert und zu einem späteren Zeitpunkt aus diesem wieder ausgelesen werden. Ein Messgerät, das sowohl einen Prozessor als auch einen Datenspeicher umfasst, ist in der Lage, Messdaten mit dem Prozessor entweder selber zu verarbeiten und die verarbeiteten Messdaten im Datenspeicher zum späteren Auslesen abzuspeichern, oder es kann die Messdaten unverarbeitet zum späteren Verarbeiten oder Auslesen im Datenspeicher zwischenspeichern. Mittels der Schnittstelle kann das Messgerät mit einem Datensammler, einem übergeordneten Computer, einem Laptop, einem Notebook, einem Smartphone, dem Internet oder einem anderen beliebigen Computernetzwerk verbindbar sein, um Messdaten an andere Geräte übertragen zu können. Zudem kann das Messgerät über die Schnittstelle steuerbar ausgeführt sein, wobei es über die Schnittstelle zum Empfangen externer Steuerbefehle eingerichtet sein kann. Darüber hinaus kann das Messgerät mit einer internen Energiequelle versehen oder mit dem Anschluss für eine Energiequelle mit einer externen Energiequelle verbindbar sein. Als interne Energiequelle des Messgerätes eignen sich Batterien oder Akkumulatoren, während als Anschluss für eine Energiequelle eine Anschlussbuchse oder ein Steckerkabel vorgesehen sein können.

Sofern das erfindungsgemäße Messgerät wenigstens eine Schnittstelle aufweist, kann es sich bei dieser um eine Schnittstelle für eine kabelgebundene oder eine drahtlose Datenübertragung handeln. So kann eine kabelgebundene Schnittstelle als Steckverbindung und insbesondere als USB-Schnittstelle (Universal Serial Bus) ausgeführt sein. Ganz allgemein können aber auch beliebige andere drahtgebundene Schnittstellen vorgesehen sein, wie zum Beispiel serielle Schnittstellen gemäß dem RS-232 Standard. Eine Schnittstelle zur drahtlosen Datenübertragung lässt sich hingegen mit handelsüblichen Bausteinen realisieren. Beispielsweise kann eine drahtlose Datenübertragung nach dem Wireless USB-Standard oder nach dem Bluetooth genannten Industriestandard gemäß IEEE 802.15.1 für die Datenübertragung zwischen Geräten über kurze Distanz per Funktechnik vorgesehen sein. In solchen Fällen weist die Schnittstelle eine Antenneneinheit auf.

Die Erfindung wird nachfolgend anhand eines bevorzugten Ausführungsbeispiels näher erläutert. Dabei zeigen:
- Figur 1: einen schematischen Querschnitt durch ein erfindungsgemäßes Messgerät;
- Figur 2: eine untere Seite des in der Figur 1 gezeigten Messgeräts;
- Figur 3: einen Schnitt entlang der Linie A-A durch das in der Figur 1 gezeigte Messgerät;
- Figur 4: einen Schnitt entlang der Linie B-B durch das in der Figur 1 gezeigte Messgerät.

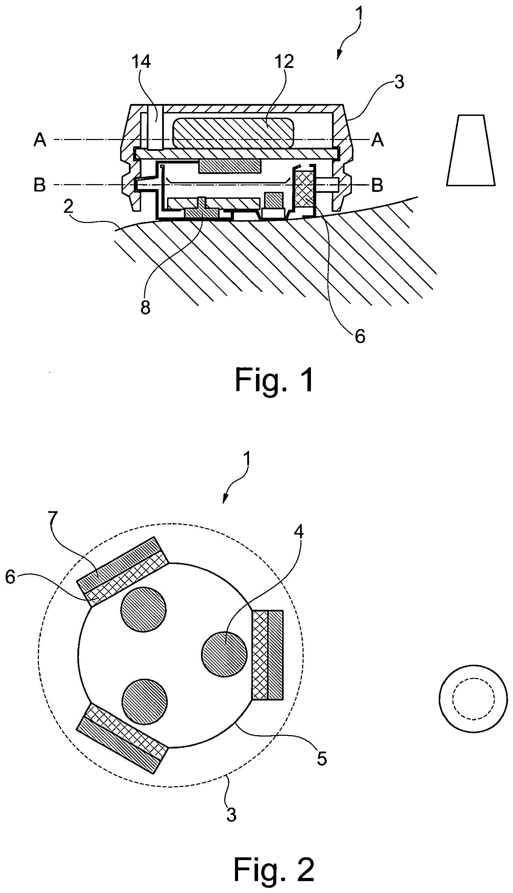

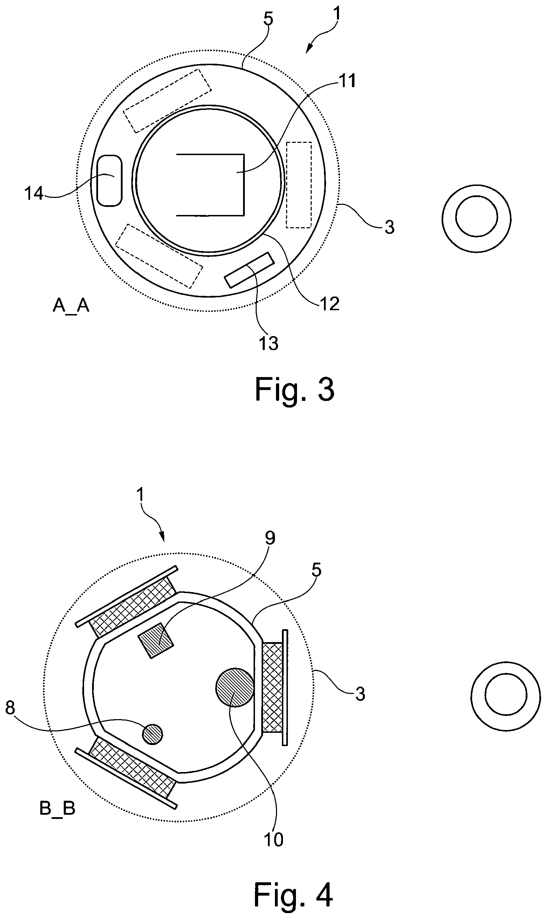

In der Figur 1 ist ein Messgerät 1 gemäß der vorliegenden Erfindung im Querschnitt dargestellt. Das Messgerät 1 ist in der Figur 1 auf einer unebenen Oberfläche einer zu vermessenden und daher als Messobjekt dienenden Maschine 2 aufgesetzt. Figur 2 zeigt das Messgerät 1 mit Blickrichtung auf eine untere Seite, welche in der Figur 1 der Oberfläche der Maschine 2 zugewandt ist. Darüber hinaus ist in der Figur 3 ein Schnitt durch das Messgerät 1 entlang einer in der Figur 1 mit A-A bezeichneten Linie gezeigt, und in der Figur 4 ist ein Schnitt durch das Messgerät 1 entlang einer in der Figur 1 mit B-B bezeichneten Linie gezeigt.

Wie aus den Figuren 1 und 2 hervorgeht, weist das Messgerät 1 eine Gummihülle 3 mit einer flachen, leicht kegelstumpfförmigen Form auf. An der unteren, bei Aufsetzen des Messgerätes 1 auf die Maschine 2 der Maschine 2 zugewandten Seite, sind gleichmäßig entlang eines gedachten oder imaginären Kreises verteilt drei vorspringende Füße 4 mit jeweiligen ebenen Kontaktflächen vorgesehen, die mit der Oberfläche der Maschine 2 in Kontakt sind, wenn das Messgerät 1 wie in der Figur 1 auf der Maschine 2 aufgesetzt ist. Ferner sind innerhalb der Gummihülle 3 seitlich entlang eines aus der Blickrichtung der Figur 2 die drei Füße 4 umschließenden kreisförmigen inneren Strukturelemen tes 5, das mit dem imaginären Kreis, an dem die Füße 4 angeordnet sind, konzentrisch ist, jeweils drei Magnete 6 mit jeweiligen Magnetpolen 7 angeflanscht. Jeweils einer der Magnete 6 ist jeweils einem der Füße 4 derart zugeordnet, dass sowohl der innerhalb des Strukturelementes 5 befindliche vorspringende Fuß 4 als auch der außerhalb am Strukturelement 5 angeordnete Magnet 6 aus der Blickrichtung der Figur 2 von einer imaginären, dem Mittelpunkt des Strukturelementes 5 radial entspringenden Geraden mittig durchstoßen werden.

Die Kontaktfläche eines der Füße 4 umfasst einen Temperaturfühler 8, der im in der Figur 1 gezeigten auf der Maschine 2 aufgesetzten Zustand des Messgerätes 1 mit der Oberfläche des Messgerätes 1 in Kontakt kommt. Da der Temperaturfühler 8 in einen der Füße 4 bzw. in dessen Kontaktfläche integriert ist, wird eine kompakte Bauweise des Messgerätes 1 erreicht, da der Temperaturfühler 8 zur Messung der Oberflächentemperatur der Maschine 2 nicht von außerhalb der Gummihülle 3 des Messgerätes 1 an der Maschine 2 angelegt werden muss. Ferner sind den beiden anderen Füßen 4 bzw. Kontaktfläche des Messgerätes jeweilige Beschleunigungssensoren zugeordnet, wobei wie in der Figur 4 gezeigt einer der Beschleunigungssensoren durch einen MEMS-Baustein 9 realisiert ist und der andere Beschleunigungssensor ein piezoelektrischer Beschleunigungssensor 10 ist. Zudem umfasst das Messgerät 1 wie in der Figur 3 zu sehen ist einen Prozessor 11, einen Akkumulator 12 als Energiequelle, eine Antenne 13 zur drahtlosen Kommunikation und eine USB-Schnittstelle 14 zum drahtgebundenen Verbinden des Messgerätes 1 mit in den Figuren nicht gezeigten externen Geräten.

Da das Messgerät 1 drei gleichmäßig entlang eines imaginären Kreises verteilt vorspringende Füße 4 mit jeweiligen ebenen, kreisförmigen Kontaktflächen gleicher Größe aufweist, sind nicht nur die Mittelpunkte der Füße 4 bzw. der Kontaktflächen entlang des imaginären Kreises mit äquidistanten Winkelabständen angeordnet, sondern die Füße 4 bzw. deren Kontaktflächen sind auch in linearen Abständen jeweils äquidistant voneinander beabstandet. Somit bringen die Füße 4 für das Messgerät 1 die statische Wirkung eines Dreibeines mit sich, das auch auf relativ unebenen Untergründen eine hohe Standfestigkeit gewährt.

Insofern wird dem Messgerät 1 wie in der Figur 1 gezeigt auf der uneben verlaufenden Oberfläche der Maschine 2 allein durch die spezifische Anordnung der Füße 4 eine sichere Standfestigkeit gewährt. Diese wird durch die Wirkung der Magnete 6 noch erhöht, sofern die Oberfläche der Maschine 2 von einem metallischen Material ist, welches von den Magneten 6 angezogen wird. Infolge der von den Magneten 6 auf die Oberfläche der Maschine 2 ausgeübten Magnetkraft wird das Messgerät 1 in einem solchen Fall an die Maschine 2 angedrückt. Hierdurch wird ein verlässlicher Kontakt zwischen den Füßen 4 bzw. deren Kontaktflächen und der Oberfläche der Maschine 2 sichergestellt.

Ein sicherer Kontakt zwischen den Füßen 4 und der Oberfläche der Maschine 2 ist für die Verlässlichkeit der von dem Messgerät 1 ausgeführten Messungen wichtig. So kann eine Messung der Oberflächentemperatur der Maschine 2 mit dem Messgerät 1 nur dann verlässlich ausgeführt werden, wenn der den Temperaturfühler 8 umfassende Fuß 4 des Messgerätes 1 sicher auf der Oberfläche der Maschine 2 aufliegt. Ebenso können der MEMS-Baustein 9 und der piezoelektrische Beschleunigungssensor 10 nur dann Vibrationen der Maschine 2 verlässlich erfassen, wenn die ihnen zugeordneten Füße 4 des Messgerätes 1 sicheren Kontakt mit der Oberfläche der Maschine 2 haben, da nur dann Vibrationen der Maschine 2 über die Kontaktflächen der Füße 4 verlässlich an die jeweiligen Beschleunigungssensoren übertragen werden können.

Im Betrieb wird das Messgerät 1 nun wie in der Figur 1 dargestellt an eine unter Umständen unebene Oberfläche einer Maschine 2 angelegt, deren Oberflächentemperatur und Vibrationen von dem Messgerät 1 gemessen werden sollen. Dabei wird das Messgerät 1 von den Magneten 6 an die Maschine 2 angezogen, wodurch die Füße 4 bzw. deren Kontaktflächen in sicheren Kontakt mit der in der Figur 1 gezeigten unebenen Oberfläche der Maschine 2 kommen und das Messgerät 1 fest an der Maschine 2 anliegt. Durch den Akkumulator 12 wird das Messgerät 1 mit der für den Betrieb notwendigen Energie versorgt.

Vom Prozessor 11 gesteuert führt das Messgerät 1 nun seine Messungen durch. Hierbei wird die Oberflächentemperatur der Maschine 2 vom Temperaturfühler 8 erfasst, während der MEMS-Baustein 9 und der piezoelektrische Beschleunigungssensor 10 Vibrationen der Maschine 2 erfassen.

Die Temperaturmessung und die Vibrationsmessungen können alle gleichzeitig oder wahlweise auch einzeln, beispielsweise nacheinander erfolgen. Schließlich können die erfassten Daten in Echtzeit über die Antenne 13 an ein anderes, in den Figuren nicht gezeigtes, Gerät übertragen werden, oder aber sie werden in einem in den Figuren nicht gezeigten Zwischenspeicher zwischengespeichert und zu einem späteren Zeitpunkt über die USB-Schnittstelle 14 ausgelesen. Ferner kann das Messgerät 1 während seines Betriebes, und insbesondere während der Ausführung einer oder mehrerer Messungen, drahtlos über die Antenne 13 oder kabelgebunden über die USB-Schnittstelle 14 gesteuert werden.

### Bezugszeichenliste

- 1.: Messgerät
- 2.: Maschine
- 3.: Gummihülle
- 4.: Fuß
- 5.: Strukturelement
- 6.: Magnet
- 7.: Magnetpol
- 8.: Temperaturfühler
- 9.: MEMS-Baustein
- 10.: piezoelektrischer Beschleunigungssensor
- 11.: Prozessor
- 12.: Akkumulator
- 13.: Antenne
- 14.: USB-Schnittstelle

## Patentansprüche

1. Messgerät (1), das zum Messen von Messgrößen eines Messobjektes (2) auf einer das Messgerät (1) unterstützenden Oberfläche des Messobjektes (2) aufsetzbar ist, wobei das Messgerät (1) wenigstens drei vorspringende Kontaktflächen (4) umfasst, deren Mittelpunkte im Wesentlichen gleichmäßig entlang eines Kreises verteilt sind und die bei Aufsetzen des Messgerätes (1) auf der Oberfläche eines Messobjektes (2) an dieser Oberfläche anliegen und von der Oberfläche unterstützt sind, **dadurch gekennzeichnet, dass** eine erste der Kontaktflächen (4) einen Temperaturfühler (8) zum Messen der Oberflächentemperatur des Messobjektes (2) umfasst, während eine zweite und dritte der Kontaktflächen (4) zum Messen jeweiliger anderer Messgrößen vorgesehen sind.

2. Messgerät (1) nach Anspruch 1, bei dem die zweite Kontaktfläche (4) Teil eines ersten Vibrationsmessers (9) zum Messen von Schwingungen des Messobjektes (2) ist.

3. Messgerät (1) nach Anspruch 2, bei dem die dritte Kontaktfläche (4) Teil eines zweiten Vibrationsmessers (10) zum Messen von Schwingungen des Messobjektes (2) ist, die hochfrequenter sind als die vom ersten Vibrationsmesser (9) gemessenen Schwingungen des Messobjektes (2).

4. Messgerät nach einem der Ansprüche 2 oder 3, bei dem der erste Vibrationsmesser (9) und/oder der zweite Vibrationsmesser (10) einen MEMS-Baustein aufweist, der zur Bestimmung einer Richtung zum Lot zum Erdmittelpunkt vorgesehen oder eingerichtet ist,

5. Messgerät (1) nach einem der vorhergehenden Ansprüche, bei dem jeder der Kontaktflächen (4) wenigstens ein Magnet (6) zugeordnet ist, wobei das Messgerät (1) mittels von den Magneten (6) ausgeübten magnetischen Kräften an der Oberfläche des Messobjektes (2) fixierbar ist.

6. Messgerät (1) nach Anspruch 5, bei dem wenigstens einer der Magnete (6) beweglich ausgeführt ist.

7. Messgerät (1) nach einem der vorhergehenden Ansprüche, das wenigstens einen Prozessor (11) und/oder wenigstens einen Datenspeicher und/oder wenigstens eine Schnittstelle (13, 14) zur Datenübertragung und/oder wenigstens eine Energiequelle (13) und/oder wenigstens einen Anschluss für eine Energiequelle aufweist.

8. Messgerät (1) nach Anspruch 7, bei dem die wenigstens eine Schnittstelle (13, 14) für eine kabelgebundene oder eine drahtlose Datenübertragung vorgesehen ist.

## Claims

1. Measuring device (1) which, in order to measure measured variables of an object (2) being measured, can be placed on a surface of the object (2) being measured, which surface supports the measuring device (1), said measuring device (1) comprising at least three projecting contact surfaces (4), the center points of which are distributed substantially uniformly along a circle and which, when the measuring device (1) is placed on the surface of an object (2) being measured, lie against said surface and are supported by the surface, **characterized in that** a first of the contact surfaces (4) comprises a temperature sensor (8) for measuring the surface temperature of the object (2) being measured, while a second and a third of the contact surfaces (4) are provided to measure respective other measured variables.

2. Measuring device (1) according to Claim 1, in which the second contact surface (4) is a part of a first vibrometer (9) for measuring oscillations of the object (2) being measured.

3. Measuring device (1) according to Claim 2, in which the third contact surface (4) is part of a second vibrometer (10) for measuring oscillations of the object (2) being measured which are of higher frequency than the oscillations of the object (2) being measured that are measured by the first vibrometer (9) .

4. Measuring device according to either of Claims 2 and 3, in which the first vibrometer (9) and/or the second vibrometer (10) has a MEMS component, which is provided or designed to determine a direction with respect to the perpendicular to the center of the Earth.

5. Measuring device (1) according to one of the preceding claims, in which each of the contact surfaces (4) is assigned at least one magnet (6), wherein the measuring device (1) can be fixed to the surface of the object (2) being measured by means of magnetic forces exerted by the magnets (6).

6. Measuring device (1) according to Claim 5, in which at least one of the magnets (6) is designed to be movable.

7. Measuring device (1) according to one of the preceding claims, which has at least one processor (11) and/or at least one data memory and/or at least one interface (13, 14) for data transmission and/or at least one energy source (13) and/or at least one connection for an energy source.

8. Measuring device (1) according to claim 7, in which the at least one interface (13, 14) is provided for cable-bound or wire-free data transmission.

## Revendications

1. Appareil de mesure (1) à placer sur une surface d'un objet (2) à mesurer, la surface soutenant l'appareil de mesure (1), pour mesurer des grandeurs de mesure de l'objet (2) à mesurer,
l'appareil de mesure (1) comportant au moins trois surfaces de contact (4) en saillie dont les points centraux sont répartis de manière essentiellement uniforme le long d'un cercle, qui reposent sur la surface d'un objet (2) à mesurer lorsque l'appareil de mesure (1) est placé sur cette surface et qui sont soutenus par la surface,
**caractérisé en ce que**
une première des surfaces de contact (4) comporte une sonde de température (8) qui mesure la température de surface de l'objet (2) à mesurer, une deuxième et une troisième des surfaces de contact (4) étant prévues pour mesurer d'autres grandeurs de mesure quelconque.

2. Appareil de mesure (1) selon la revendication 1, dans lequel la deuxième surface de contact (4) fait partie d'un premier dispositif (9) de mesure des vibrations qui mesure les vibrations de l'objet (2) à mesurer.

3. Appareil de mesure (1) selon la revendication 2, dans lequel la troisième surface de contact (4) fait partie d'un deuxième dispositif (9) de mesure des vibrations qui mesure des vibrations de l'objet (2) à mesurer de fréquence plus élevée que les vibrations de l'objet (2) à mesurer mesurées par le premier dispositif (9) de mesure des vibrations.

4. Appareil de mesure (1) selon l'une des revendications 2 ou 3, dans lequel le premier dispositif (9) de mesure des vibrations et/ou le deuxième dispositif (9) de mesure des vibrations présentent un module MEMS prévu ou conçu pour déterminer une direction par rapport à la normale au centre de la terre.

5. Appareil de mesure (1) selon l'une des revendications précédentes, dans lequel au moins un aimant (6) est associé à chacune des surfaces de contact (4), l'appareil de mesure (1) pouvant être immobilisé sur la surface de l'objet (2) à mesurer au moyen des forces magnétiques exercées par les aimants (6).

6. Appareil de mesure (1) selon la revendication 5, dans lequel au moins l'un des aimants (6) est configuré de manière à pouvoir se déplacer.

7. Appareil de mesure (1) selon l'une des revendications précédentes, qui présente au moins un processeur, au moins une mémoire de données, au moins une interface (13, 14) pour l'échange de données et/ou au moins un raccordement à une source d'énergie.

8. Appareil de mesure (1) selon la revendication 7, dans lequel la ou les interfaces (13, 14) sont prévues pour un échange de données par fil ou sans fil.
